Europäisches Patentamt

**European Patent Office**

**Office européen des brevets**

(19)

(11) Publication number: **0 139 394**
**A2**

# EUROPEAN PATENT APPLICATION

(12)

(21) Application number: **84305700.1**

(22) Date of filing: **22.08.84**

(51) Int. Cl.⁴: **F 24 H 1/20**

(30) Priority: **24.08.83 GB 8322694**

(43) Date of publication of application:
**02.05.85 Bulletin 85/18**

(84) Designated Contracting States:
**BE DE GB IT NL**

(71) Applicant: **JACKSON CATERING EQUIPMENT LIMITED**
**P.O.Box 153**
**Leeds,LS1 1QR(GB)**

(72) Inventor: **Duncan, Michael E.**
**Hestia Fieldhead Lane**
**Birstall West Yorkshire(GB)**

(74) Representative: **Skerrett, John Norton Haigh et al,**
**H.N. & W.S. SKERRETT Rutland House 148 Edmund**
**Street**
**Birmingham B3 2LQ(GB)**

(54) **Self-feeding water-heating boiler.**

(57) A self-feeding water-heating boiler for dispensing hot water for beverage making purposes has an electric immersion heater (18) in a boiling chamber (12) which communicates at the top through a steam pipe (26) with an overhead condenser (14) containing the sensing element (30) of a steam responsive thermostat arranged to control a solenoid-operated water supply inlet valve (36). Incoming fresh water admitted through the inlet valve (36) is fed first to the condenser (14) where-in it is sprayed through a nozzle (32a) directly onto the thermostat sensing element (30) and collects to provide a permanent cooling reservoir in the bottom part of the condenser before passing through an outlet (38, 40) to a feed tank (16) provided with a water level sensor which also controls the inlet valve (36). Water from the feed tank (16) is delivered to the lower part of the boiling chamber (12). The arrangement leads to improved control by the steam thermostat of the water supply feed and maintenance of near boiling temperature within the boiling chamber.

./...

Croydon Printing Company Ltd.

FIG.1.

## SELF-FEEDING WATER-HEATING BOILER

The present invention relates to water-heating apparatus, in particular water-heating boilers for producing and delivering or dispensing, on demand, boiling or near-boiling water. Such water-heating boilers are, for example, commonly used in the catering industry to provide boiling water for making tea and other beverages, and are usually of the so-called "self-feeding" type having an automatic water supply feed system.

In one known arrangement of self-feeding electric water-heating boiler of the above-mentioned kind, a closed vessel constituting a boiling chamber is fitted towards the bottom with an electric immersion heater element and communicates at the top via a connecting passageway provided by a short pipe with an overhead steam condensing vessel having a water inlet which connects to the mains water supply through a solenoid-operated inlet valve. Mounted in the steam condensing vessel is an elongate sensing element of a temperature sensor constituting a steam responsive thermostat which element extends into the pipe of the passageway communicating with the boiling chamber; such element in this known arrangement may actually project through into the interior of the boiling chamber. Adjacent the top of and within the boiling chamber there is also a water level sensor such as a float-operated switch device, and the electric immersion heater element is physically associated with a heater temperature sensing electrical cut-out device which is connected in the electrical supply circuit to the heater element in series with a normally closed switch controlled by the steam thermostat sensing element. The solenoid of the water inlet valve, together with a switch controlled by the water level sensor, is connected in parallel with the thermostat switch (and heater cut-out). The arrangement is such that, in operation, initially the water inlet solenoid valve is closed, the solenoid being short-circuited, and with no water in the boiling chamber the immersion heater rapidly heats up until its temperature sensing cut-out trips and open circuits. This removes the short circuit to the water inlet valve solenoid which is then energised and the water inlet valve opens admitting into the steam condensing vessel water which drains down through the connecting pipe into the boiling chamber. The water level in the boiling chamber therefore rises until it reaches and covers the immersion heater, cooling the latter and causing the cut-out to re-close, thereby restoring full heating current so that the water soon boils and generates steam which rises up into the steam condensing vessel. This is sensed by the steam thermostat, the thermostat switch opens, and the solenoid is re-energised opening the inlet valve and causing water again to be admitted so as to drain down into the boiling chamber and raise the level therein. The cooling effect of introducing this fresh water temporarily stops further boiling and steam generation, whereupon the steam thermostat re-closes the thermostat switch, once more short-circuiting the solenoid and re-closing the water inlet valve until the water again boils. The cycle then repeats, and the water level in the boiling chamber rises in stages until eventually it is filled and the water level sensor operates to prevent further energisation of the solenoid and opening of the water inlet valve while the steam thermostat then merely cycles to energise the heating element sufficiently to maintain the temperature around boiling point. After drawing off any quantities of the boiling or near-boiling water for use, the boiling chamber then refills or is replenished through a similar cycle of operations.

It will be appreciated that a main objective of this arrangement is to maintain at all times the temperature of the water in the boiling chamber at or close to boiling point ready for instant draw-off and immediate use, even when the boiling chamber is not full and is being filled or re-filled. In practice, however, this objective is difficult to achieve satisfactorily with the known arrangement referred to because the response of the steam thermostat is insufficient to exercise enough control to prevent the quantities of fresh water introduced from producing temporarily too much cooling and hence relatively large variations in temperature below boiling point which can seriously detract from performance for purposes such as tea making.

A principal object of the present invention is accordingly to provide an improved water-heating boiler arrangement which can overcome or reduce the above-mentioned problem and result in more effective control of the incoming water quantity and less temperature variation.

The known arrangement of water-heating boiler referred to has also had other practical disadvantages or short-comings, such as possibilities of back-feeding into mains water supplies contrary to common Water Authority regulations, difficult access for removing scale from the boiling chamber, and a physical arrangement of components which limits or restricts the adaptability of the apparatus for meeting different user requirements. It is therefore a further object in preferred embodiments of the present invention to provide additional features or improvements to overcome other disadvantages as hereinafter disclosed.

According to the present invention as claimed, a water-heating boiler for producing, and delivering or dispensing on demand, boiling or near-boiling water, said boiler being provided with an automatic water supply feed system and incorporating also a steam responsive temperature sensor or thermostat arranged to operate cyclically in use during filling and refilling of the boiler so as to open a water supply inlet valve whenever the water in a boiling chamber of the boiler boils and produces steam and so as to re-close the water supply inlet valve when the water in said boiler ceases to boil whereby fresh water is introduced intermittently to cause the water level in the boiling chamber to rise in stages during filling so as to enable the temperature of said water in the boiling chamber to be maintained at or close to boiling point ready for draw-off and immediate use, the water supply feed system being arranged to deliver the incoming fresh water, controlled by said water supply inlet valve, into a steam collecting and condensing space through water inlet means, is characterised in that said water inlet means is arranged to direct at least a significant portion of such incoming water on to a sensing element of the steam responsive temperature sensor or thermostat which sensing element is located in said steam collecting and condensing space whereby the incoming water cools said sensing element before feeding into the boiling chamber, and, in consequence, the control exercised by the steam responsive thermostat on the water supply feed is enhanced.

In preferred embodiments, the steam collecting and condensing space is provided by the hollow interior of a condenser vessel connected with the boiling chamber through a communicating steam passageway or steam inlet pipe, and the water inlet means may comprise a nozzle or jet having an orifice opening inwardly of the condenser vessel and aimed at the thermostat sensing element which may be a bulb of elongate form mounted to extend horizontally within the interior of the condenser vessel in spaced relationship with the enclosing walls or other structure of said vessel so as to be out of thermal contact therewith.

From the condenser vessel the incoming fresh water is preferably passed to a feeder arrangement by which it is introduced into the boiling chamber at a position below the top thereof. Generally, the boiling chamber will be provided with a localised heater, such as an electric immersion heater, for heating the water therein to boiling point and the position at which the incoming fresh water is introduced is advantageously adjacent, preferably above, the position or level of such heater so that the cooling effect of this incoming water will be most effective for rapidly terminating further boiling and production of steam and thereby again enhancing the control exercised by the steam responsive thermostat.

It will be appreciated that the enhancement in the operation of the steam responsive thermostat control arrangement resulting from the above-mentioned features involves a shorter response time and a reduction in the cycling period so that fresh water is introduced more frequently but in smaller amounts, thereby preventing undue cooling and temperature variations of the contents of the boiling chamber and enabling the average temperature to be maintained closer to boiling point during filling and refilling or replenishing.

The fresh water feeder arrangement provided between the condenser vessel and boiling chamber in preferred embodiments further includes an intermediate feed tank or cistern provided with overflow drainage means and a water level sensor that operates to shut off the incoming water supply when a predetermined maximum water level is reached corresponding to the maximum water level of the water in the boiling chamber which is in hydrostatic equilibrium therewith. Such intermediate feed tank or cistern facilitates meeting National Water Council or other Water Authority byelaws or regulations which demand a break-tank for water feeds to safeguard against any possible back feeding into mains water supplies. Controlling the maximum level of water in the boiling chamber by a level sensor located in a separate feed tank rather than in the boiling chamber itself incidentally eliminates problems with the latter arrangement likely to arise in hard water areas due to the build-up of scale on the sensor.

So that any scale which may collect in the boiling chamber can more readily be removed, the boiling chamber is preferably constructed in the form of a vessel with a detachable top or cover plate.

The condenser vessel may be of elongate cylindrical form mounted horizontally above the boiling chamber, with the interconnecting passageway or steam inlet pipe extending vertically between the two vessels. Preferably, the upper end of the steam inlet pipe terminates within the interior of the condenser vessel at a higher level than the bottom wall portion or base thereof and is located away from the water inlet in a relative position such as to avoid incoming water from passing or draining down directly into the boiling chamber.

To improve the efficiency of the condenser, which is beneficial for ensuring rapid sensing by the steam responsive thermostat of a cessation of boiling when fresh water is fed in, the incoming fresh water is preferably delivered with increased velocity and is sprayed into the interior of the condenser; it may further be specifically directed or sprayed against a significant area of the inner surface of the walls of the condenser vessel as well as against the thermostat sensing element to increase its cooling effect.

Also, and perhaps more importantly, it has been found to be most advantageous to construct the condenser vessel so that, in use, a quantity of the incoming fresh water remains trapped and provides a permanent cooling reservoir lying in the bottom thereof. This is conveniently achieved by arranging for the condenser vessel to have a water outlet, leading to the intermediate feed tank of the boiling chamber feeder arrangement, positioned above the bottom or base of the condenser although of course below the upper end of the steam inlet pipe.

Other advantageous and beneficial features will be apparent from the following more detailed description, presented by way of example, of a preferred embodiment of a water boiler in accordance with the invention which is illustrated in the accompanying drawings.

In said drawings,

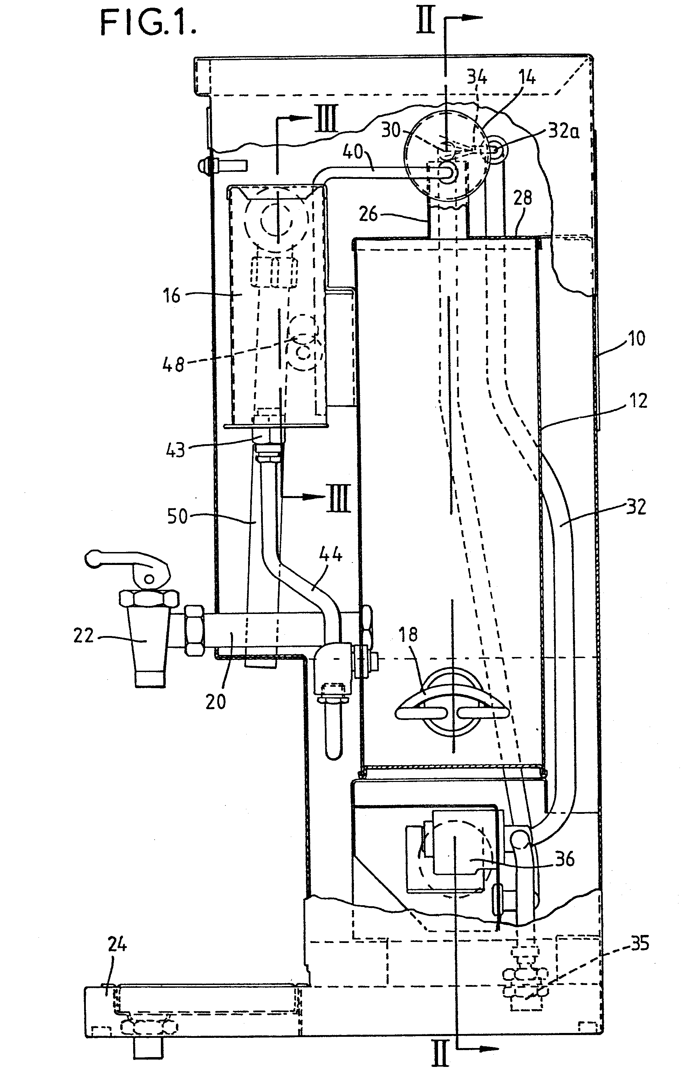

FIGURE 1 is a side elevational view, partly broken away and partly in section, of the water boiler of this embodiment;

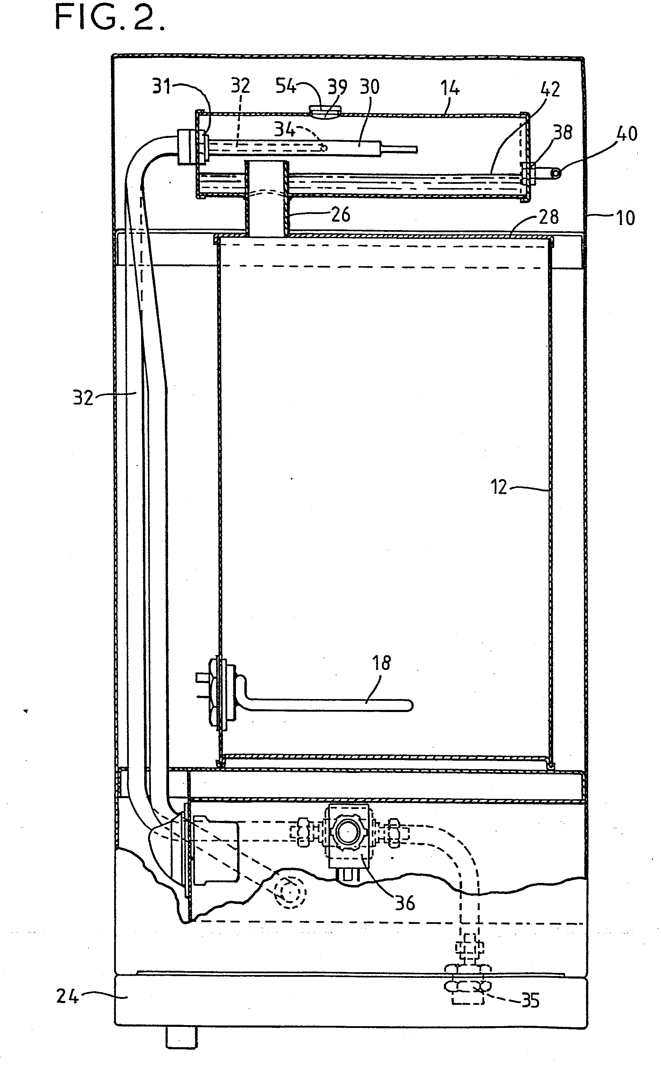

FIGURE 2 is a vertical sectional view taken on line II - II of FIGURE 1, with parts being omitted for clarity;

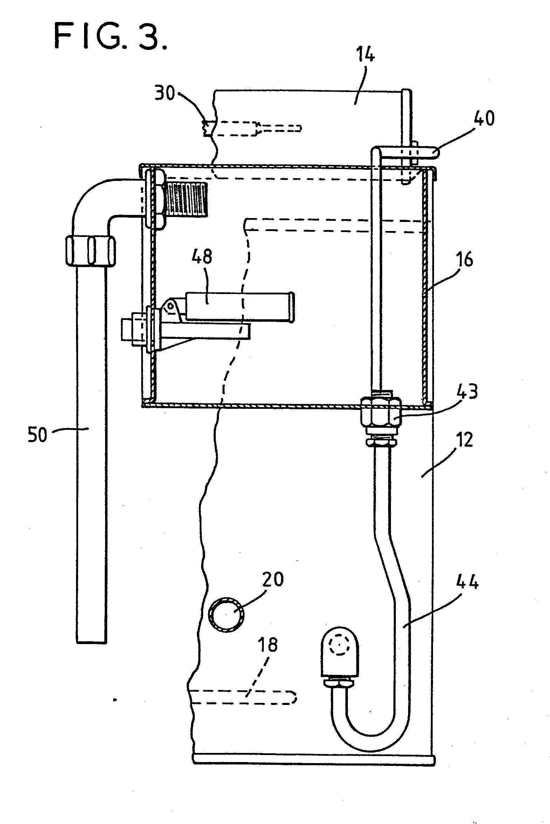

FIGURE 3 is a fragmentary vertical sectional view taken on line III - III of FIGURE 1;

The water-heating boiler illustrated in the drawings is designed for use primarily in the catering industry to provide boiling or near-boiling water for purposes such as making tea and other hot beverages, the water contents of the boiler being stored and maintained at a temperature close to boiling point so as to be available for drawing off immediately on demand.

The boiler is of the self-feeding type having an automatic water supply feed system and comprises an outer casing 10, suitable for bench or counter-top mounting or wall mounting, housing a main boiling chamber 12, an overhead steam condenser vessel 14, and a cistern type fresh water feed tank 16 and other associated components.

The boiling chamber 12 is provided by a tinned copper tank of generally rectangular form fitted towards the bottom with an inwardly-extending horizontally disposed electric immersion heater element 18 which incorporates a thermal cut-out switch and provides the heating source. At a slightly higher level, an outlet tube 20 leads to a draw-off tap 22 at the front which is at a suitable height above a forwardly-projecting base 24 as to permit easy access for filling teapots or other receptacles when the unit is in position on a counter-top.

At the top of the boiling chamber 12 an interconnecting pipe 26 providing a communicating passageway for admitting steam leads upwardly into the condenser vessel 14 which is a closed-ended cylindrical vessel, also conveniently made of tinned copper, mounted horizontally above the boiling chamber so that the hollow interior provides a steam collecting and condensing space.

The steam inlet pipe 26 may be fixed in its upper part to the bottom or base wall of the condenser vessel 14 and may serve to support the latter in position, the lower end being fixed to a top cover 28 of the boiling chamber. This top cover 28 is advantageously detachably fitted in place so that it can be removed (as a unit together with the condenser vessel after disconnecting other parts attached thereto) to provide access to the boiling chamber interior for servicing and descaling.

Within the condenser vessel 14 is a steam responsive thermostat sensing element 30, in the form of a slender elongate bulb, which is carried by a mounting grommet 31 in one end wall so as to extend axially in spaced relationship with the walls of the vessel. At the back, a reduced diameter end section 32a of a water inlet feed pipe 32 is sealed into and passes through the rear wall of the condenser vessel to terminate within the hollow interior in a short nozzle or jet 34 having an orifice aimed towards the sensing element 30. In use, the water inlet feed pipe 32 connects to an external fresh water supply system through a main water inlet connector 35 and a normally-closed solenoid operated water inlet control valve 36 located in the lower part of the casing, and incoming water is sprayed under pressure into the condenser vessel interior. By virtue of the relative positioning of the nozzle or jet 34 and the sensing element 30, which is preferably accurately set up by the manufacturer and checked by observation through a normally covered aperture 54 in the top of the condenser, a substantial proportion of the incoming water sprays directly on to the sensing element 30 and most of the remainder sprays against a significant area of the inner surface of the condenser vessel walls thereby promoting more effective cooling action.

As shown in the drawing, the upper end of the steam inlet pipe 26 terminates at a level some distance above the base of the condenser vessel, and slightly below this level a water outlet 38 in the far end wall of the condenser vessel leads through an outlet pipe 40 to the feed tank or cistern 16. By virtue of this arrangement, after water has entered into the condenser vessel during use, a certain quantity is trapped to provide a permanent pool or reservoir in the bottom (as indicated at 42) from which it spills over through the outlet 38 without entering the steam pipe 26 and draining down directly into the boiling chamber.

Feed tank 16 forms part of an intermediate feeder arrangement for transfering fresh incoming water from the condenser vessel 14 to the boiling chamber 12 for filling and replenishing the latter, a water outlet 43 in the bottom of this tank being connected to the boiling chamber by way of a delivery pipe 44 having a U-shaped loop (to prevent hot water convection currents) arranged to introduce the fresh water into the boiling chamber at a level slightly above but close to the immersion heater element 18 and below the draw-off tube 20, as

shown.

The feed tank 16 also contains a level sensor 48, conveniently a pivoted float-operated reed switch device, which sets the maximum level of water therein, and also the level of water in the boiling chamber with which the feed tank 16 is in hydrostatic equilibrium, by being operatively connected in the electrical energising circuit of the solenoid water supply inlet valve 36. The feed tank 16 is also provided with a conventional overflow pipe 50.

As indicated, the solenoid valve 36 and the other main electrical controls are compactly housed in the lower cooler part of the casing 10 below the boiling chamber 12.

In operation, assuming the boiling chamber is initially empty, upon switching on the electrical power supply the heater element 18 rapidly heats up until its thermal cut-out trips and this has the effect of causing the solenoid valve 36 to be energised and to open. In consequence, water from the mains supply is then delivered via the condenser vessel 14 and intermediate feeder tank 16 to the boiling chamber 12 until the level therein reaches the heating element 18. The cooling effect of this water on the heating element then results in the thermal cut-out re-closing, the water inlet valve solenoid is de-energised and the inlet valve itself re-closes to shut off the water supply. With full heating power restored the water in the boiling chamber is rapidly brought up to the boil, thereby producing steam which passes up through the steam pipe 26 and collects in the condenser vessel. The steam sensing thermostat then responds to cause solenoid valve 36 to re-open and hence further water is introduced into the boiling chamber. The cycle is then repeated and the net effect is that the level of water in the boiling chamber rises in stages while the temperature is kept close to boiling point ready for draw-off and immediate use until eventually the boiling chamber is filled to its maximum rated capacity. At this point the level sensor 48 operates to keep the solenoid inlet valve 36 closed, thereby preventing further inflow of water unless some is first drawn off through tap 22, and the steam responsive thermostat simply cycles to switch the heater element on and off to maintain the temperature.

The overall general sequence of operation thus corresponds closely to that of the known type of boiler previously referred to but with the particular arrangement described, as a result especially of the fresh water cooling of the steam thermostat element and efficient functioning of the steam condenser and feed system, a more effective and closer control of the incoming water is achieved leading to a shorter cycling period of the control system and introduction of water in smaller quantities, with less temperature variation in consequence, when the boiling chamber is filling or re-filling and there is generally an improved efficiency and performance.

It will, however, be understood that various modifications in the precise constructional and operational details herein described in relation to a specific embodiment may be made within the scope of the present invention as defined in the appended claims.

CLAIMS

1. A water-heating boiler for producing, and delivering or dispensing on demand, boiling or near-boiling water, said boiler being provided with an automatic water supply feed system and incorporating also a steam responsive temperature sensor or thermostat arranged to operate cyclically in use during filling and refilling of the boiler so as to open a water supply inlet valve (36) whenever the water in a boiling chamber (12) of the boiler boils and produces steam and so as to re-close the water supply inlet valve (36) when the water in said boiler ceases to boil whereby fresh water is introduced intermittently to cause the water level in the boiling chamber (12) to rise in stages during filling so as to enable the temperature of said water in the boiling chamber to be maintained at or close to boiling point ready for draw-off and immediate use, the water supply feed system being arranged to deliver the incoming fresh water, controlled by said water supply inlet valve (36), into a steam collecting and condensing space (14) through water inlet means (32,32a,34), characterised in that said water inlet means (32,32a,34) is arranged to direct at least a significant portion of such incoming water on to a sensing element (30) of the steam responsive temperature sensor or thermostat which sensing element is located in said steam collecting and condensing space (14) whereby the incoming water cools said sensing element (30) before feeding into the boiling chamber (12), and, in consequence, the control exercised by the steam responsive thermostat on the water supply feed is enhanced.

2. A water-heating boiler as claimed in claimed in Claim 1 wherein the steam collecting and condensing space is provided by the hollow interior of a condenser vessel (14) connected with the boiling chamber (12) through a communicating steam passageway or steam inlet pipe (26).

3. A water-heating boiler as claimed in Claim 2 wherein the water inlet means comprises a nozzle or jet (34) having an orifice opening inwardly of the condenser vessel (14) and aimed at the thermostat sensing element (30).

4.    A water-heating boiler as claimed in Claim 3 wherein the thermostat sensing element (30) comprises a bulb of elongate form mounted to extend horizontally within the interior of the condenser vessel (30) in spaced relationship with the enclosing walls or other structure of said vessel so as to be out of thermal contact therewith.

5.    A water-heating boiler as claimed in any of Claims 2 to 4, wherein a feeder arrangement (40,16,44) is provided to feed the incoming fresh water from the condenser vessel (14) to the boiling chamber (12) so as to enter the latter at a position below the top thereof.

6.    A water-heating boiler as claimed in Claim 5, wherein the boiling chamber (12) is provided with a localised heating element (18) for heating the water therein to boiling point and the incoming fresh water is introduced into said boiling chamber by said feeder arrangement at a position adjacent the position or level of said heating element.

7.    A water-heating boiler as claimed in Claim 6 or 7, wherein the fresh water feeder arrangement includes an intermediate feed tank or cistern (16) provided with overflow drainage means (50) and with a water level sensor (48) operable to shut off the incoming water supply when a predetermined maximum water level is reached, the arrangement being such that the level of the water in said feed tank or cistern (16) maintains hydrostatic equilibrium with the level of water in the boiling chamber (12).

8.    A water-heating boiler as claimed in any of Claims 2 to 7, wherein the condenser vessel (14) is of elongate form extending horizontally above the boiling chamber (12) and the interconnecting passageway or steam inlet pipe (26) extends vertically therebetween.

9.    A water-heating boiler as claimed in Claim 9, wherein the upper end of said passageway or steam inlet pipe (26) projects upwardly within the interior of the condenser (14) and is located remote from the water inlet (32a,34) in such position relative thereto as to prevent incoming water from passing or draining down directly from the water inlet into the boiling chamber (12) through said passageway or pipe (26).

10. A water-heating boiler as claimed in any of Claims 2 to 9, wherein the water inlet means (32, 34) is arranged to spray the incoming fresh water into the interior of the condenser (14) and to direct the spray of water against a significant area of the inner surface of the walls of the condenser vessel (14) as well as against the thermostat sensing element (30).

11. A water-heating boiler as claimed in any of Claims 2 to 10, wherein the condenser vessel (14) is constructed so that, in use, a quantity of the incoming fresh water is trapped therein and provides a permanent cooling reservoir (42).

12. A water-heating boiler as claimed in Claim 11, wherein a water outlet (38) in the condenser vessel (14) through which in use the fresh water exits and is fed to the boiling chamber (12) is positioned above the bottom or base of the condenser vessel but below the upper end of the communicating steam passageway or steam inlet pipe (26).

FIG.1.

0139394

0139394

FIG.2.

FIG. 3.